# EUROPEAN PATENT APPLICATION

(11) **EP 0 661 374 A1**
(43) Date of publication of application: **05.07.1995**
(21) Application number: 93203725.2
(22) Date of filing: 30.12.1993
(51) Int. Cl.: C10K 1/34, C10K 1/20, C10K 1/10, C01B 3/54

(54) **Process for removing nitrogen compounds from synthesis gas**

(71) Applicant: SHELL INTERNATIONALE RESEARCH MAATSCHAPPIJ B.V., NL-2596 HR Den Haag (NL)
(72) Inventor: van den Berg, Franciscus Gondulfus Antonius, NL-1031 CM Amsterdam (NL); van der Scheer, Albert, NL-1031 CM Amsterdam (NL)

(57) **Abstract**

Process of removing hydrogen cyanide and ammonia from synthesis gas obtained from partly oxidizing in a gasification reactor (2) a feed selected from the group including coal, oil or natural gas comprising supplying the synthesis gas in the presence of water to a reactor (5) containing hydrolysis catalyst; contacting the synthesis gas having an increased ammonia content from the reactor (5) in a sorption vessel (9) with regenerable sorption material to obtain ammonia-loaded sorption material and treated synthesis gas having a reduced content of nitrogen compounds, and withdrawing treated synthesis gas from the sorption vessel (9); and regenerating loaded sorption material to produce regenerated sorption material for use in step (b) and a regeneration off-gas enriched in ammonia, withdrawing regeneration off-gas enriched in ammonia from the sorption vessel (9), and introducing it into the gasification reactor (2).

## Description

The present invention relates to a process of removing nitrogen compounds, hydrogen cyanide and ammonia, from synthesis gas obtained from partly oxidising in a gasification reactor a feed selected from the group including coal, oil, petroleum coke or natural gas.

It is known to remove hydrogen cyanide from a synthesis gas by hydrolyzing hydrogen cyanide in the presence of water to ammonia and carbon monoxide. Such a process is described in UK patent specification No. 2 159 132, this publication discloses that the hydrolysis of hydrogen cyanide is carried out at a temperature in the range of from 200 to 500 °C in the presence of a hydrolysis catalyst in the form of a titania-containing catalyst.

This publication, however, is silent about removing the ammonia from the synthesis gas having an increased ammonia content obtained after hydrolysis of hydrogen cyanide.

It is an object of the present invention to provide a simple process to remove nitrogen compounds from the gas obtained after hydrolysis of hydrogen cyanide.

To this end the process of removing hydrogen cyanide and ammonia from synthesis gas obtained from partly oxidizing in a gasification reactor a feed selected from the group including coal, oil or natural gas comprising the steps of:
(a) supplying the synthesis gas in the presence of water to a reactor containing hydrolysis catalyst and withdrawing from the reactor a synthesis gas having an increased ammonia content;
(b) contacting the synthesis gas having an increased ammonia content in a sorption vessel with regenerable sorption material to obtain ammonia-loaded sorption material and treated synthesis gas having a reduced ammonia content, and withdrawing treated synthesis gas from the sorption vessel; and
(c) regenerating loaded sorption material to produce regenerated sorption material for use in step (b) and a regeneration off-gas enriched in ammonia, and introducing regeneration off-gas from the sorption vessel into the gasification reactor.

Although in the gasification reactor ammonia is formed, feeding ammonia to the gasification reactor does not result in an increase of the concentration of ammonia in the gaseous mixture leaving gasification reactor, see UK patent application publication No. 2 177 110. It is believed that the ammonia formed in the gasification reactor originates from nitrogen atoms in the feed, that ammonia supplied to the gasification reactor is converted to molecular nitrogen and water, and that the molecular nitrogen is inert.

The invention further relates to regenerating the hydrolysis catalyst, to this end the supply of synthesis gas in the presence of water to the reactor containing the hydrolysis catalyst is interrupted, and the hydrolysis catalyst is contacted with a gas which is free from nitrogen compounds.

The invention will now be described by way of example in more detail with reference to the accompanying drawings, wherein
Figure 1 shows schematically the process line-up for the present invention;
Figure 2 shows schematically an alternative line-up for the adsorption part of the process of the present invention; and
Figure 3 shows schematically an alternative adsorption method.

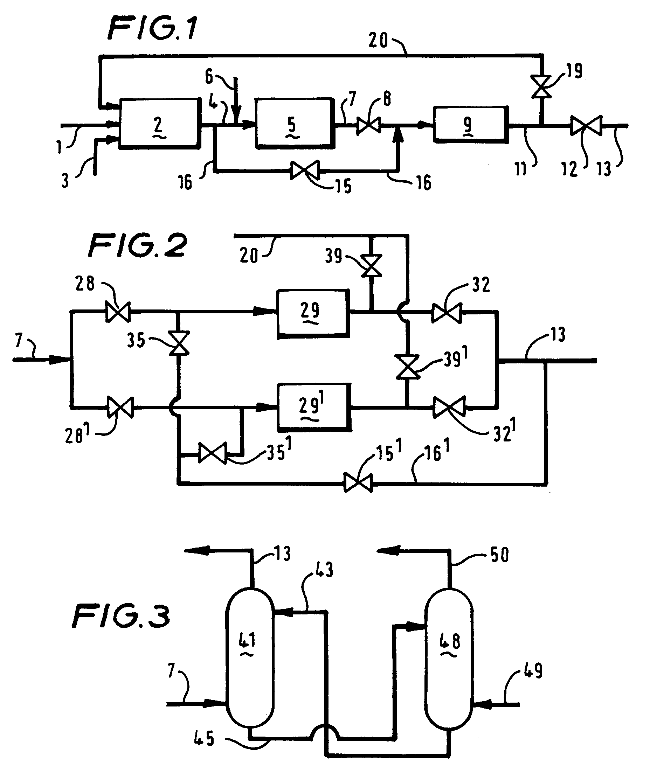

Reference is made to Figure 1, A feed selected from the group including coal, hydrocarbon oil, petroleum coke or natural gas is supplied through conduit 1 to a gasification reactor 2. In the gasification reactor 2 the feed is partly oxidized to produce a gaseous mixture including carbon monoxide and hydrogen. The oxidant can be steam or a free oxygen-containing gas such as oxygen, air, or oxygen enriched air, and it is supplied into the gasification reactor 2 via conduit 3. The conditions in the gasification reactor are known and will not be discussed here.

In the specification the gaseous mixture including carbon monoxide and hydrogen is referred to as raw synthesis gas.

Raw synthesis gas leaves the gasification reactor 2 through conduit 4. This raw synthesis gas contains several contaminants, of these contaminants are relevant to the present invention nitrogen compounds in the form of hydrogen cyanide and ammonia. The other contaminants, such as ash and sulphur compounds, are removed in a suitable manner; as the removal of these contaminants is not relevant to the present invention it will not further be discussed.

To remove hydrogen cyanide, the raw synthesis gas is contacted in reactor 5 in the presence of water with a suitable catalyst. In reactor 5 hydrogen cyanide is catalytically hydrolysed to carbon monoxide and ammonia. The conditions in the hydrolysis reactor are known and will not be discussed here. An example of a suitable hydrolysis catalyst is a titania-containing catalyst as described in UK patent specification No. 2 159 132. Water is supplied to the raw synthesis gas through conduit 6.

From reactor 5 synthesis gas having an increased ammonia content is withdrawn, this gas has a reduced hydrogen cyanide content.

The synthesis gas having an increased ammonia content is passed through conduit 7 via open valve 8 to sorption vessel 9. The sorption vessel 9 contains regenerable sorption material for ammonia. The sorption material in the sorption vessel 9 is an adsorbent in the form of adsorbent particles. The adsorbent is known in the art and the kind of adsorbent is not relevant to the present invention. A suitable adsorbent is a molecular sieve.

In the sorption vessel 9 the synthesis gas having an increased ammonia content is contacted with the adsorbent particles to obtain ammonia-loaded adsorbent particles and purified synthesis gas having a reduced ammonia content. The purified synthesis gas is withdrawn from the sorption vessel 9 through conduit 11, and via open valve 12 the purified synthesis gas is passed through conduit 13 away for further treatment.

The loaded adsorbent particles are regenerated in the following way. At first valve 8 is closed to interrupt contacting the synthesis gas having an increased ammonia content with the adsorbent particles in sorption vessel 9, and valve 12 is closed to prevent gas from flowing into conduit 13. Thereafter valve 15 in conduit 16 is opened to supply regeneration gas in the form of synthesis gas to the sorption vessel 9. Loaded adsorbent particles in sorption vessel 9 are contacted with the regeneration gas to obtain regenerated adsorbent particles and regeneration off-gas containing desorbed ammonia. This regeneration off-gas is passed via open valve 19 through conduit 20, and it is introduced into the gasification reactor 2. After the regeneration has been completed valves 15 and 19 are closed and valves 8 and 12 are opened so that synthesis gas having an increased ammonia content is contacted with the regenerated adsorbent particles in sorption vessel 9. The concentration of nitrogen compounds in the regeneration gas should be such that during regeneration ammonia desorbs from the loaded absorbent particles.

Reference is now made to Figure 2 showing schematically an alternative line-up for the adsorption part, wherein the adsorption part comprises two sorption vessels 29 and 29' each filled with adsorbent particles. The use of two sorption vessels allows a continuous and cyclic operation wherein each cycle comprises adsorption in the first sorption vessel 29 and simultaneously regenerating the adsorbent particles in the second sorption vessel 29' , followed by adsorption in the second sorption vessel 29' and simultaneously regenerating the adsorbent particles in the first sorption vessel 29.

During normal operation synthesis gas is produced in the gasification reactor 2 and hydrogen cyanide is hydrolyzed in the reactor 5 to obtain synthesis gas having an increased ammonia content as described with reference to Figure 1.

Synthesis gas having an increased ammonia content is supplied though conduit 7 via open valve 28 to the first sorption vessel 29 in which it is contacted with the adsorbent particles to obtain ammonia-loaded adsorbent particles and treated synthesis gas. Treated synthesis gas is withdrawn from the first sorption vessel 29 via open valve 32 and conduit 13. The adsorbent particles in the second sorption vessel 29' are contacted with a regeneration gas supplied to it trough conduit 16' from conduit 13 via open valve 35' to obtain regenerated adsorbent particles and regeneration off-gas enriched in ammonia. The regeneration off-gas is supplied to the gasification reactor via open valve 39' and conduit 20. Valves 28' and 32' and valves 35 and 39 are closed. Valve 15' controls the flowrate of regeneration gas through conduit 16'.

Once the regeneration of the adsorbent particles in the second sorption vessel 29' is completed and the adsorbent particles in the first sorption vessel 29 are loaded to a predetermined level, the adsorbent particles in the first sorption vessel 29 will be regenerated and the second sorption vessel 29' will be used to remove ammonia. To this end valves 28 and 32 and valves 35' and 39' are closed to interrupt contacting the synthesis gas having an increased ammonia content with the adsorbent particles in the first sorption vessel 29, and to interrupt contacting the adsorbent particles in the second sorption vessel 29' with the regeneration gas. Subsequently synthesis gas having an increased ammonia content is supplied though conduit 7 via open valve 28' to the second sorption vessel 29' in which it is contacted with the adsorbent particles to obtain ammonia-loaded adsorbent and treated synthesis gas. Treated synthesis gas is withdrawn from the second sorption vessel 29' via open valve 32' and conduit 13. The adsorbent particles in the first sorption vessel 29 are contacted with an regeneration gas supplied to it trough conduit 16 and open valve 35 to obtain regenerated adsorbent and regeneration off-gas enriched in ammonia. The regeneration off-gas is supplied to the gasification reactor via open valve 39 and conduit 20.

Once the regeneration of the adsorbent particles in the first sorption vessel 29 is completed and the adsorbent particles in the second sorption vessel 29' are loaded to a predetermined level, the adsorbent particles in the second sorption vessel 29' are regenerated and the first sorption vessel 29 is used to remove ammonia. To this end valves 28' and 32' and valves 35 and 39 are closed to interrupt contacting the synthesis gas having an increased ammonia content with the adsorbent particles in the second sorption vessel 29', and to interrupt contacting the adsorbent particles in the first sorption vessel 29 with the regeneration gas.

Ammonia may also be removed from the synthesis gas having an increased ammonia content exiting the reactor 5 using a sorption material in the form of a liquid and regenerable absorbent such as water. A line-up of this alternative to the above described adsorption is shown schematically in Figure 3. The synthesis gas having an increased ammonia content from the reactor (5 in Figure 1) is passed through conduit 7 to a sorption vessel in the form of absorber 41. In the absorber 41 it is counter-currently contacted with lean regenerable absorbent supplied to the absorber 41 through conduit 43. Purified synthesis gas leaves the absorber 41 through conduit 13. Loaded absorbent leaves the absorber 41 through conduit 45, and it is passed to regenerator 48, where loaded absorbent is regenerated by stripping the loaded absorbent with regeneration gas supplied through conduit 49, a suitable regeneration gas is steam. Regeneration off-gas containing the removed ammonia is withdrawn through conduit 50 and passed to the gasification reactor (2 in Figure 1), and regenerated absorbent is supplied through conduit 43 to the absorber 41.

A further aspect of the present invention relates to regenerating the hydrolysis catalyst. With time the activity of the hydrolysis catalyst in reactor 5 (see Figure 1) decreases, therefore the hydrolysis catalyst has to be regenerated. Regenerating the hydrolysis catalyst is done by interrupting supplying the synthesis gas in the presence of water to the reactor 5 which contains the hydrolysis catalyst, and contacting the hydrolysis catalyst with a gas which is free from nitrogen compounds.

For continuous operation there are provided two catalytic reactors, one being used to hydrolyze hydrogen cyanide and the other being regenerated. The gas free from nitrogen compounds is suitably a slip stream of the purified gas and the off-gas from the regeneration can be supplied into the gasification reactor.

In conclusion the present invention provides a simple process to remove nitrogen compounds from synthesis gas by hydrolyzing the nitrogen compounds and by removing ammonia from the gas stream obtained after hydrolysis.

## Claims

1. Process of removing hydrogen cyanide and ammonia from synthesis gas obtained from partly oxidizing in a gasification reactor a feed selected from the group including coal, oil or natural gas comprising the steps of:
(a) supplying the synthesis gas in the presence of water to a reactor containing hydrolysis catalyst and withdrawing from the reactor a synthesis gas having an increased ammonia content;
(b) contacting the synthesis gas having an increased ammonia content in a sorption vessel with regenerable sorption material to obtain ammonia-loaded sorption material and treated synthesis gas having a reduced ammonia content, and withdrawing treated synthesis gas from the sorption vessel; and
(c) regenerating loaded sorption material to produce regenerated sorption material for use in step (b) and a regeneration off-gas enriched in ammonia, and introducing regeneration off-gas from the sorption vessel into the gasification reactor.

2. Process according to claim 1, wherein the regenerable sorption material consists of adsorbent arranged in the sorption vessel, and wherein regenerating loaded sorption material comprises interrupting contacting the synthesis gas having an increased ammonia content with the adsorbent; contacting the adsorbent with a regeneration gas to obtain regenerated adsorbent and regeneration off-gas enriched in ammonia which is introduced into the gasification reactor; and interrupting contacting the adsorbent with the regeneration gas.

3. Process according to claim 1, wherein use is made of two sorption vessels containing adsorbent, and wherein the steps of contacting the synthesis gas having an increased ammonia content with sorption material and regenerating loaded sorption material comprise:
(i) contacting the synthesis gas having an increased ammonia content in the first sorption vessel with the adsorbent to obtain ammonia-loaded adsorbent and treated synthesis gas, withdrawing treated synthesis gas from the first sorption vessel, and contacting the adsorbent in the second sorption vessel with a regeneration gas to obtain regenerated adsorbent and regeneration off-gas enriched in ammonia which is introduced into the gasification reactor;
(j) interrupting contacting the synthesis gas having an increased ammonia content with the adsorbent in the first sorption vessel, and interrupting contacting the adsorbent in the second sorption vessel with the regeneration gas;
(k) contacting the adsorbent in the first sorption vessel with a regeneration gas to obtain regenerated adsorbent and regeneration off-gas enriched in ammonia which is introduced into the gasification reactor, and contacting the synthesis gas having an increased ammonia content in the second sorption vessel with adsorbent to obtain ammonia-loaded adsorbent and treated synthesis gas;
(l) interrupting contacting the adsorbent in the first sorption vessel with the regeneration gas, and interrupting contacting the synthesis gas having an increased ammonia content with the adsorbent in the second sorption vessel; and
(m) continuing with step (i).

4. Process according to claim 1, wherein the regenerable sorption material is a liquid absorbent, and wherein regenerating loaded liquid absorbent comprises stripping the loaded absorbent with a regeneration gas.

5. Process according to anyone of the claims 1-4, further comprising regenerating the hydrolysis catalyst by interrupting supplying the synthesis gas in the presence of water to the reactor containing the hydrolysis catalyst, and contacting the hydrolysis catalyst with a gas which is free from nitrogen compounds.
